Europäisches Patentamt

European Patent Office

Office européen des brevets

(19)

(11) Veröffentlichungsnummer : **0 124 806**
**B1**

(12) **EUROPÄISCHE PATENTSCHRIFT**

(45) Veröffentlichungstag der Patentschrift :
30.09.87

(51) Int. Cl.⁴ : **G 06 F 13/36**

(21) Anmeldenummer : 84104305.2

(22) Anmeldetag : 16.04.84

(54) Vergabeschaltung für Parallelbusse von Datenverarbeitungsanlagen.

(30) Priorität : 06.05.83 CH 2481/83

(43) Veröffentlichungstag der Anmeldung :
14.11.84 Patentblatt 84/46

(45) Bekanntmachung des Hinweises auf die Patenterteilung : 30.09.87 Patentblatt 87/40

(84) Benannte Vertragsstaaten :
AT CH DE FR GB LI SE

(56) Entgegenhaltungen :
EP-A- 0 063 972
US-A- 4 096 569
IBM TECHNICAL DISCLOSURE BULLETIN, Band 22,
Nr. 3, August 1979, Seiten 1059-1060, New York, USA;
A. BLUM: "Look-ahead access request circuit for
computer systems"

(73) Patentinhaber : BBC Brown Boveri AG
CH-5401 Baden (CH)

(72) Erfinder : Kirrmann, Hubert, Dip.-Ing.
Im Rüteli 17
CH-5406 Baden (CH)

EP 0 124 806 B1

## Beschreibung

Bei der Erfindung wird ausgegangen von einer Vergabeschaltung für Parallelbusse von Datenverarbeitungsanlagen mit mehreren Prozessoren nach dem Oberbegriff des Patentanspruchs 1.

Mit diesem Oberbegriff nimmt die Erfindung auf einen Stand der Technik Bezug, wie er in dem britischen Bericht : P 869-PLB-18, Results of arbiter test, a preliminary report to the P896 committee, von Paul L. Borill, University College London, Mullard Space Science Laboratory, 31.5.1981, beschrieben ist. Dort ist eine Busvergabeschaltung für eine asynchrone Busvergabe mit vier SR-Flipflops und einem monostabilen Kippglied angegeben. Diese Schaltung gewährleistet, dass Teilnehmer mit gleichzeitigem Zutrittswunsch zum Bus um den begehrten Buszutritt « streiten » können, und dies auch gleichzeitig mit einer laufenden Uebertragung. Dieser « Streit » wird entsprechend einer Teilnehmerkennziffer, welche die Identität und Priorität des Teilnehmers bestimmt, entschieden. Eine 4-bit-Zahl ermöglicht z. B. eine Kennzeichnung von 16 Teilnehmern, eine 5-bit-Zahl eine Kennzeichnung von 32 Teilnehmern usw. Der Bus besitzt dann entsprechend 4 bzw. 5 Busprioritätsleitungen für die Uebertragung der Identität bzw. Priorität. In dem obengenannten Bericht ist eine Teilnehmer-Auswahlschaltung mit 8 Busprioritätsleitungen für die Prioritätsermittlung angegeben. Um zu verhindern, dass Teilnehmer niedrigerer Priorität bei unerfülltem Zutrittswunsch wiederholt von einem Teilnehmer höherer Priorität vom Buszutritt ausgeschlossen werden, ist in der Busvergabeschaltung für eine « Gerechtigkeit » (« fairness ») der Busvergabe gesorgt, indem eine Erfüllung des Zutrittswunsches solange gespeichert und ein erneuter Zutrittswunsch von diesem Teilnehmer solange zurückgehalten wird, bis die Zutrittswünsche aller anderen, auf Buszutritt wartenden Teilnehmer einmal erfüllt sind. Liegt von diesen anderen Teilnehmern kein Zutrittswunsch mehr vor, so beginnen die Teilnehmer mit dem zunächst zurückgehaltenen Zutrittswunsch mit dem sogenannten « Streit » bzw. mit dem Prioritäts-Auswahlverfahren, und der Gewinner erhält entsprechend seiner Priorität den Buszutritt. Das gleiche Auswahlverfahren erfolgt auch dann, wenn dieser Teilnehmer als letzter den Bus zur Uebertragung seiner Daten hatte und kein anderer Teilnehmer inzwischen den Buszutritt begehrte. In diesem zuletzt genannten Fall muss auch ein Teilnehmer, der allein auf dem Bus ist, trotzdem das Auswahlverfahren durchführen, obwohl von keinen anderen Teilnehmern den Bus verlangt wird.

Bei einem z. B. aus der USA-Zeitschrift proceedings FJCC (Fall Joint Computer Conference) 1972, AFIPS Press, S. 719-740 unter der Bezeichnung « Daisy-Chain » bekannten Busvergabeverfahren wird die Bus-Zutrittserlaubnis von einem Teilnehmer an den folgenden weitergegeben, wenn ein Teilnehmer seine Informationsübertragung beendet hat, oder den Bus zur Zeit nicht benötigt. Falls der Bus nicht benötigt und die Zutrittserlaubnis weitergegeben wird, geht Zeit verloren, der Bus bleibt solange unbesetzt.

In dem IBM Technical Disclosure Bulletin, Band 22, Nr. 3, August 1979, Seiten 1059-1060 New York, USA ; A. Blum : « Look-ahead access request circuit for computer systems » ist die Kommunikation über den Systembus zwischen Einheiten. einer Rechenanlage beschrieben, die unabhängig voneinander arbeiten. Es wird erkannt, dass in einem solchen System, das eine Prioritätsvorrichtung enthält, Zeitverluste auftreten können, wenn eine Einheit zum Beispiel zu viele Speicherzugriffe verlangt, da jedesmal die Prioritätsvorrichtung ein Bewilligungssignal generieren muss. Die bekannte Lösung umfasst das Merkmal, dass kein Bewilligungssignal erzeugt wird, wenn eine auswahlaktive Einheit als letzte den Bus zur Datenübertragung hatte und erneut Buszutritt begehrt, ohne dass andere Einheiten zuvor den Bus angefordert haben.

Die Erfindung, wie sie in den Patentansprüchen gekennzeichnet ist, löst die aus der zuletzt genannten Literaturstelle bereits bekannte Aufgabe, eine einfache und billig zu implementierende Bus-Vergabeschaltung bzw. einen Zugriffskoordinator anzugeben, mit dem die Durchführung des Prioritäts-Auswahlverfahrens eingespart wird, wenn ein auswahlaktiver Busteilnehmer als letzter den Bus zur Datenübertragung hatte und erneut Buszutritt begehrt, ohne dass andere Teilnehmer zuvor den Bus angefordert haben (default mastership).

Ein Vorteil der erfindungsgemässen Schaltung besteht in einer schnelleren Verfügbarkeit des Busses und damit in einer Zeiteinsparung. Eine besondere Busleitung ist für diese Massnahme nicht erforderlich. Die sonst für diese Information erforderliche zusätzliche Busleitung wird hier durch ein Kippglied ersetzt. Ein Teilnehmer behält die Herrschaft über den Bus, auch wenn seine Datenübertragung abgeschlossen ist, bis der Bus durch einen anderen Teilnehmer beansprucht wird.

Die Erfindung wird nachstehend anhand eines Ausführungsbeispieles erläutert. Es zeigen :

Figur 1 ein Mehrprozessorsystem, für das die erfindungsgemässe Busvergabeschaltung anwendbar ist,

Figur 2 ein Blockschema der Busvergabeschaltung,

Figur 3 eine Busvergabeschaltung gemäss Fig. 2 und

Figur 4 ein Signaldiagramm zur Erläuterung der Wirkung der Busvergabeschaltung gemäss Fig. 3.

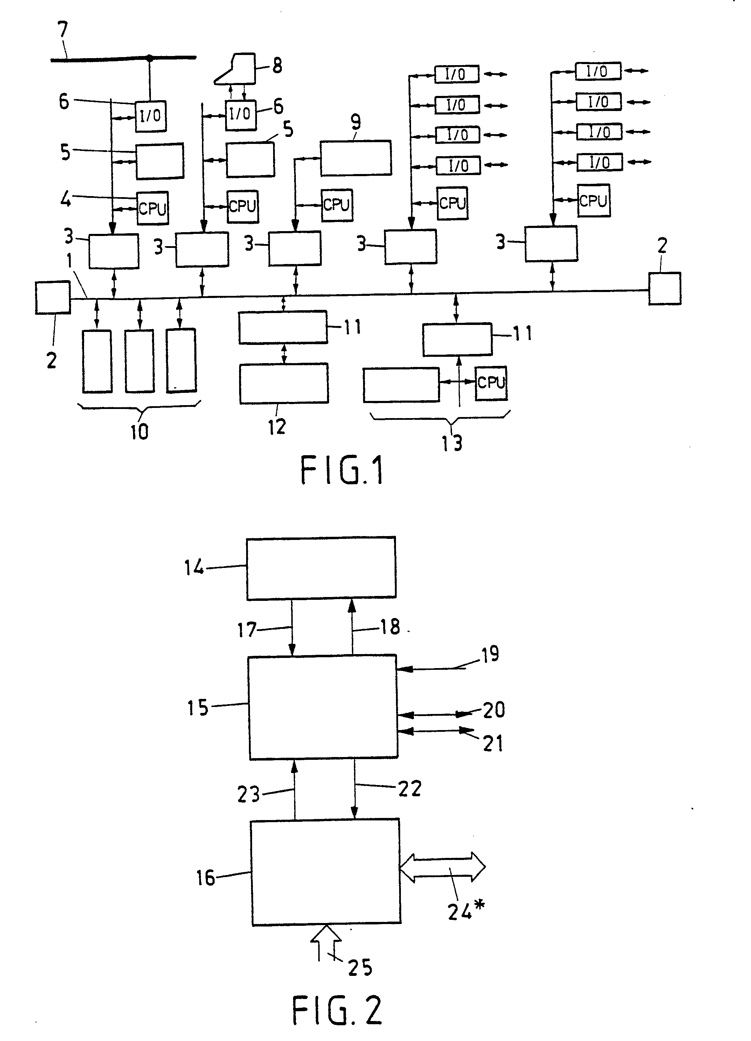

Die erfindungsgemässe Busvergabeschaltung ist für Mehrprozessorsysteme verwendbar, bei denen mehrere Prozessoren bzw. Teilnehmer Informationen übertragen und/oder untereinander austauschen. Fig. 1 zeigt ein Beispiel für ein solches Mehrprozessorsystem. An eine Sammelschiene mit mehreren elektrischen Leitungen bzw. an einen Parallelbus, nachfolgend kurz als Bus 1 bezeichnet, welcher eine oder zwei Busabschlussimpedanzen 2 aufweist, sind über Schnittstellen 3 mehrere bezüglich der Busvergabe aktive Teilnehmer angeschlossen, die den Bus zeitweise für die Uebertragung von Informationen belegen können. Diese Busteilnehmer können eine mit CPU bezeichnete Zentraleinheit 4 und eine mit I/O bezeichnete Ein-/Ausgabeeinheit 6 aufweisen. Sie können ferner einen lokalen Speicher 5 oder eine Plattensteuereinheit 9 aufweisen. Die Ein-/Ausgabeeinheiten 6 können mit einem örtlichen Netz 7 oder mit einem Endgerät 8 in Verbindung stehen.

Unterhalb des Busses 1 sind sog. passive Teilnehmer dargestellt, die Buszutritt nur dann erhalten, wenn sie von den oberhalb des Busses dargestellten, sog. aktiven Teilnehmern « angesprochen », d. h. zur Informationsübertragung veranlasst werden. Solche passiven Teilnehmer sind z. B. Prozessoren 10 für die Ausführung wissenschaftlicher und technischer Berechnungen und über Speicherschnittstellen 11 angeschlossene gemeinsame Speicher 12 sowie sog. virtuelle Speicher 13.

Die Bauelemente für jeden Teilnehmer sind auf einer nicht dargestellten Bauelementenplatte bzw. Steckkarte angebracht. Diese Steckkarte kann auf übliche Weise in Stecker eingeschoben werden, die mit dem Bus in leitender Verbindung stehen. Diese Anordnung gewährleistet

einen symmetrischen, gleichrangigen Aufbau ohne zentrale Steuerung,

eine schnelle und gerechte Busvergabe bei gleichzeitiger Kennzeichnung des Teilnehmers, der den Bus besetzt hat und Informationen überträgt und

ein Einstecken oder Herausziehen einer Steckkarte bei laufendem System, d. h., ohne die Datenverarbeitungsanlage abzuschalten, bzw. die Passivierung oder Wiedereingliederung von Teilnehmern während des Betriebs.

Jeder Zentraleinheit 4 eines aktiven Teilnehmers ist über einen logischen Teilnehmer-Schaltkreis 14 eine Busvergabeschaltung 15 und eine Teilnehmer-Auswahlschaltung 16 zugeordnet, vgl. Fig. 2. Ein Teilnehmer meldet seinen Anspruch auf Belegung des Busses mit einem Busanforderungssignal 17' über eine Busanforderungssignalleitung 17 bei der Busvergabeschaltung 15 an. Die Busvergabeschaltung liefert ihm, im positiven Fall, über eine Busbewilligungssignalleitung 18 ein Busbewilligungssignal 18', um mitzuteilen, dass er den Bus benutzen darf. Die Busvergabeschaltung erhält zur Steuerung ferner :

a) über eine Busbesetztsignalleitung 19 ein Busbesetztsignal 19' das anzeigt, ob auf dem Bus eine Datenübertragung stattfindet. Diesem Signal muss nicht unbedingt eine Busleitung zugeordnet sein. Es kann von nicht eingezeichneten Busleitungen mit einem Synchronisationssignal und von einem Adress-Intervallsignal, das während eines Adresszyklusses von einer dafür vorgesehenen Busleitung detektierbar ist, abgeleitet werden.

b) über eine Busanspruchsignalleitung 20 ein Busanspruchsignal 20', das anzeigt, ob der Bus von mindestens einem Teilnehmer gewünscht bzw. angefordert wird,

c) über eine Auswahldauersignalleitung 21 ein Auswahldauersignal 21', das anzeigt, ob ein Auswahlvorgang bzw. ein Prioritätsstreit stattfindet ;

d) über eine GE-Signalleitung 23 ein Grösser-/Gleich- bzw. GE-Signal 23' von der Teilnehmerauswahlschaltung 16, welches das Ergebnis des Auswahlvorganges enthält.

Die Busvergabeschaltung erzeugt ferner :

e) ein Auswahldauersignal 21' wie unter c) angegeben. Es dient dazu, die asynchrone Auswahl zu realisieren.

f) ein Vergleichssignal 22', das über eine Vergleichssignalleitung 22 der Teilnehmer-Auswahlschaltung 16 zugeführt ist und die Information enthält, ob der Teilnehmer an der Auswahl teilnimmt oder nicht.

Die Teilnehmer-Auswahlschaltung 16 steht in Verbindung mit Busprioritätsleitungen 24 auf welche alle Teilnehmer, die den Bus zur Informationsübertragung haben möchten, ihre Priorität bzw. ihre Teilnehmeradresse aufbringen bzw. übertragen und an denen am Ende des Auswahlvorganges die Adresse des Gewinners der Auswahl, der als nächster den Bus erhält, anliegt bzw. detektierbar ist.

Die Teilnehmer-Auswahlschaltung 16 steht ferner mit Teilnehmeradressleitungen 25 in Verbindung, von denen die Adresse des eigenen Teilnehmers detektierbar ist.

Jeder Teilnehmer bzw. jede Steckkarte besitzt ihre eigene Identität, z. B. eine 5-bit-Zahl für 32 Teilnehmer, die gleichzeitig ihre Priorität in dem Auswahlverfahren definiert. Dabei erhält z. B. die Steckkarte mit der Bit-Kombination 11111 die höchste Priorität und die Steckkarte mit der Bit-Kombination 00000 die niedrigste, unter der Voraussetzung, dass eine « 1 » durch einen « Tief »-Pegel auf dem Bus dargestellt wird.

Bei Leitungen, die von mehreren Teilnehmern gleichzeitig aktiviert werden können, erfolgt die Ankopplung vorteilhaft durch Treiber, z. B. durch Transistoren mit sog. offenem Kollektorausgang, mit dem Zweck, dass bei einem Konflikt auf einer Leitung keine Kurzschlüsse auftreten und definierte logische Pegel entstehen.

Bezüglich der Zuordnung dieser Busvergabeschaltung zur Zentraleinheit 4 wird beispielsweise auf die Firmenschrift der INTEL Corporation, USA, Application Note AP-51, Designing 8086, 8088, 8089 Multiprocessing Sytems with the 8289 Bus Arbiter, März 1979, verwiesen.

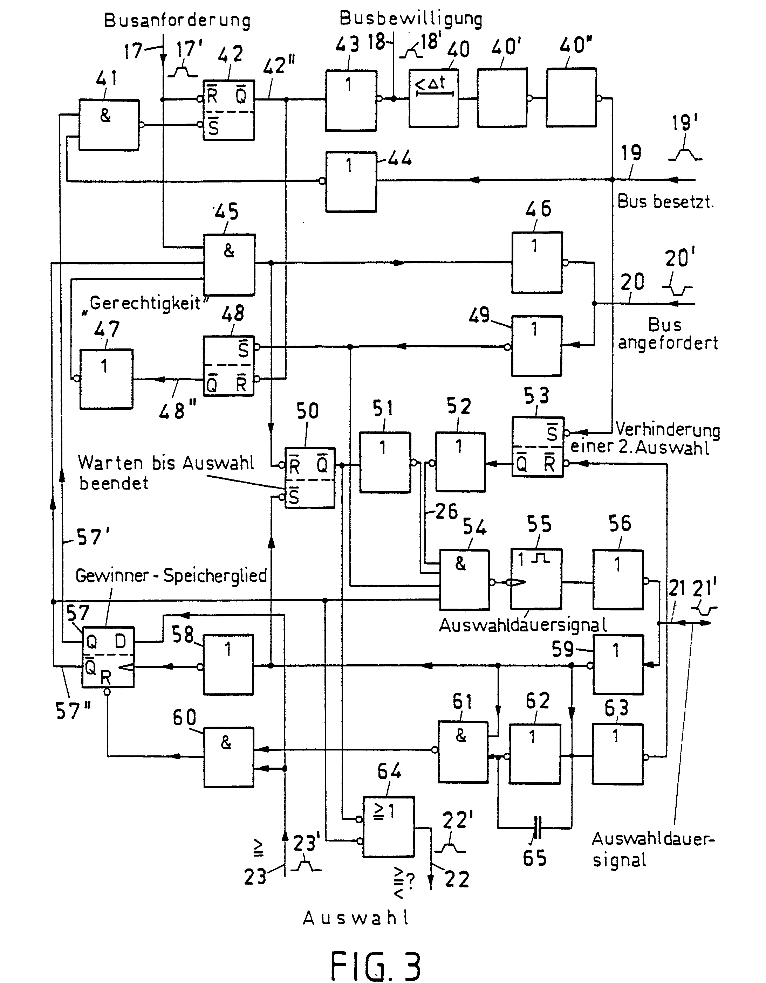

Die Busvergabeschaltung 15 ist um 6 Kippglieder herum aufgebaut, vgl. Fig. 3. Ein bistabiles Flipflop bzw. RS-Kippglied 42 ist eingangsseitig über seinen invertierten R̄-Eingang mit der Busanforderungssignalleitung 17 und mit einem Eingang eines UND-Gliedes 45 verbunden und über seinen invertierten S̄-Eingang mit dem Ausgang eines NAND-Gliedes 41. Mit seinem Q̄-Ausgang ist das RS-Kippglied 42 einerseits mit einem NICHT-Glied bzw. Inverter 43 und andererseits mit dem invertierten R̄-Eingang eines RS-Kippgliedes 48 verbunden.

Der Ausgang des Inverters 43 ist einerseits mit der Busbewilligungssignalleitung 18 und andererseits über eine Reihenschaltung eines Verzögerungsgliedes 40, eines Inverters 40' und eines weiteren Inverters 40" mit der Busbesetztsignalleitung 19 verbunden. Diese Busbesetztsignalleitung 19 ist ausserdem über einen Inverter 44 mit einem Eingang eines UND-Gliedes 41 und mit dem invertierten S̄-Eingang eines RS-Kippgliedes 53 verbunden.

Die Busanspruchsignalleitung 20 steht einerseits über einen Inverter 49 mit dem invertierten S̄-Eingang des RS-Kippgliedes 48 und andererseits über einen weiteren Inverter 46 mit dem Ausgang des UND-Gliedes 45 in Verbindung. Der Q̄-Ausgang des RS-Kippgliedes 48 ist über einen Inverter 47 mit einem Eingang des UND-Gliedes 45 verbunden.

Der invertierte R̄-Eingang des RS-Kippgliedes 53 steht über eine Reihenschaltung eines Inverters 63 und eines weiteren Inverters 59 mit der Auswahldauersignalleitung 21 in Verbindung; der Q̄-Ausgang ist über einen Inverter 52 und eine Auswahlerlaubnissignalleitung 26 mit einem Eingang eines NAND-Gliedes 54 verbunden. Der Ausgang dieses NAND-Gliedes 54 ist mit dem invertierten, dynamischen Eingang eines monostabilen Kippgliedes 55 verbunden, dessen Ausgang über einen Inverter 56 mit der Auswahldauersignalleitung 21 in Verbindung steht.

Ein weiteres RS-Kippglied 50 ist über seinen invertierten R̄-Eingang mit dem Ausgang des UND-Gliedes 45 verbunden, über seinen invertierten S̄-Eingang mit dem Ausgang des Inverters 59 und über seinen Q̄-Ausgang über einen Inverter 51 mit einem weiteren Eingang des NAND-Gliedes 54. Der Q̄-Ausgang ist gleichfalls mit einem negierten Eingang eines ODER-Gliedes 64 verbunden, dessen Ausgang mit der Vergleichssignalleitung 22 in Verbindung steht.

Ein flankengetriggertes D-Kippglied 57 steht mit seinem Triggereingang über einen Inverter 58 einerseits mit dem invertierten S̄-Eingang des RS-Kippgliedes 50 und andererseits mit dem Ausgang des Inverters 59 in Verbindung. Der Ausgang dieses Inverters 59 ist ferner direkt mit einem Eingang eines NAND-Gliedes 61 und ausserdem über eine Parallelschaltung eines Inverters 62 und eines Kondensators 65 mit einem zweiten Eingang des NAND-Gliedes 61 verbunden. Der Ausgang dieses NAND-Gliedes ist mit einem Eingang eines UND-Gliedes 60 verbunden, dessen zweiter Eingang mit der GE-Signalleitung 23 und ebenfalls mit dem D-Eingang des D-Kippgliedes 57 in Verbindung steht. Der Ausgang des UND-Gliedes 60 ist an den negierten R-Eingang des D-Kippgliedes 57 angeschlossen. Der Q̄-Ausgang des D-Kippgliedes 57 ist mit einem Eingang des NAND-Gliedes 41 verbunden, sein Q̄-Ausgang mit einem Eingang des UND-Gliedes 45, ausserdem mit einem Eingang des NAND-Gliedes 54 und mit einem negierten Eingang des ODER-Gliedes 64.

Das RS-Kippglied 42 wird gesetzt, d. h. sein invertierter S̄-Eingang wird auf « 0 » oder « Nein » gesetzt und sein Q̄-Ausgang weist das Signal « 1 » auf, wenn der Bus angefordert, d. h. das Busanforderungssignal 17' = « 1' » ist, der eigene Teilnehmer die Auswahl gewonnen hat und gleichzeitig der Bus frei ist. Wenn der eigene Teilnehmer die Auswahl gewonnen hat, ist der Q-Ausgang 57' des flankengetriggerten D-Kippgliedes 57 und der damit verbundene Eingang des NAND-Gliedes 41 auf « 1 ». Ist der Bus frei, so ist das am Eingang des Inverters 44 anliegende Busbesetztsignal 19' = « 0 » und der mit dem Ausgang dieses Inverters verbundene andere Eingang des NAND-Gliedes 41 ebenfalls « 1 ». Sind beide Eingänge des NAND-Gliedes 41 = « 1 », so ist dessen Ausgang und der S̄-Eingang des RS-Kippgliedes 42 auf « 0 ». Liegt dann das Busanforderungssignal 17' am R̄-Eingang desselben Kippgliedes 42 an, dann wird das Kippglied gesetzt.

Am Ausgang des Inverters 43 liegt das Busbewilligungssignal 18' = « 1 » an, wenn der Q̄-Ausgang 42" des RS-Kippgliedes 42 das Signal « 0 » aufweist. Weist das Busbewilligungssignal 18' den Wert « 1 » auf, so bedeutet dies, dass der Bus für den eigenen Teilnehmer zur Informationsübertragung verfügbar ist. Das RS-Kippglied 42 bleibt solange gesetzt und damit das Busbewilligungssignal 18' auf « 1 » bis der eigene Teilnehmer den Bus nicht mehr benötigt, d. h., bis ein an den invertierten R̄-Eingang dieses Kippgliedes geführtes Busanforderungssignal 17' den Wert « 0 » annimmt.

Das RS-Kippglied 53 wird verwendet, um einen zweiten Auswahlvorgang solange zu verhindern, bis der Gewinner eines ersten Auswahlvorgangs den Bus gewonnen bzw. besetzt hat. Wenn ein Auswahlvorgang stattfindet, ist das Auswahldauersignal 21' auf « 0 » und damit auch der R̄-Eingang des RS-Kippgliedes 53.

Falls der Bus besetzt ist, so ist das Busbesetztsignal 19' = « 1 » und damit auch der S̄-Eingang des RS-Kippgliedes 53, so dass dessen Ausgang Q auf « 1 » und das Auswahlerlaubnissignal 26' auf « 0 » ist. Damit wird verhindert, dass der Teilnehmer über das monostabile Kippglied 55 ein Auswahldauersignal 21' = « 0 » erzeugt. Aendert sich das Auswahldauersignal 21' von « 0 » auf « 1 » so bleibt das Signal am Q̄-Ausgang des RS-Kippgliedes 53 zunächst unverändert = « 1 ». Dieses Q̄-Ausgangssignal wird erst « 0 » und das Auswahlerlaubnissignal 26' wird « 1 », wenn das Busbesetztsignal 19' « 0 » wird, d. h. wenn der Bus frei wird. Bis dahin kann vom Teilnehmer kein Auswahldauersignal 21' erzeugt werden.

Das Setzen des Busbesetztsignals 19' erfolgt nachdem das Busbewilligungssignal 18' auf « 1 » ist und auf jeden Fall bevor ein Auswahlvorgang Zeit hat, fertig zu werden. Der Auswahlvorgang dauert etwa 350 ns.

Das RS-Kippglied 50 dient zur Verhinderung der Teilnahme des Teilnehmers an einem laufenden Auswahlverfahren. Wenn der $\bar{Q}$-Ausgang 57" des RS-Kippgliedes 50 auf « 0 » gesetzt wird, darf sich der Teilnehmer am Auswahlvorgang beteiligen. Voraussetzung dafür ist,

1. dass er den Bus beansprucht (Busanforderungssignal 17' auf « 1 »),
2. dass er nicht bereits den Bus gewonnen hat ($\bar{Q}$ von 57 auf « 1 »),
3. dass seit der letzten Buszuteilung die Anforderungen aller anderen Teilnehmer befriedigt sind ($\bar{Q}$ von 48 = « 0 », Ausgang von 47 = « 1 ») und
4. dass kein Auswahlvorgang stattfindet (Auswahldauersignal 21' = « 1 »).

Damit das Ergebnis der Auswahl im D-Kippglied 57 gespeichert werden kann, ist es erforderlich, dass das Auswahlerlaubnissignal 26' = « 1 » ist und somit über das monostabile Kippglied 55 das Auswahldauersignal 21' für eine vorgebbare Dauer auf « 0 » gesetzt werden kann. Eine Aenderung des Signals am $\bar{S}$-Eingang des RS-Kippgliedes 50 von « 0 » auf « 1 » lässt das Signal an dessen $\bar{Q}$-Ausgang unverändert. Ausserdem sperrt die Kippstufe 50 über das ODER-Glied 64 das Vergleichssignal 22' und damit die Vergleichslogik.

Das RS-Kippglied 48 dient dazu, eine « Gerechtigkeit » der Busvergabe zu gewährleisten, indem die Dauer des Prioritätsauswahlverfahrens durch den langsamsten Teilnehmer und nicht durch ein Taktsignal bestimmt wird (asynchrones Auswahlverfahren). Hatte der Teilnehmer einmal den Bus aufgrund einer Auswahl, aus der er als Sieger hervorging, und fordert er den Bus erneut an, so muss er warten, bis alle anderen Teilnehmer, die den Bus ebenfalls angefordert aber noch nicht erhalten haben, wenigstens einmal die Busbewilligung bekommen haben. In diesem Fall muss er warten bis das Busanspruchsignal 20' auf « 1 » ist, was bedeutet, dass der Bus von keinem anderen Teilnehmer angefordert ist bzw. dass diese den Bus schon einmal hatten. Hatte der Teilnehmer bereits einmal den Bus zur Verfügung, so hat der $\bar{Q}$-Ausgang 42" seines RS-Kippgliedes 42 ein « 0 »-Signal auf den $\bar{R}$-Eingang des RS-gliedes 48 übertragen, so dass dessen $\bar{Q}$-Ausgang 48" den Wert « 1 » führt und damit die Information speichert, dass der Teilnehmer den Bus einmal hatte. Eine Aenderung des Signals am $\bar{R}$-Eingang des RS-Kippgliedes 48 auf « 1 » lässt dessen Ausgangssignal unverändert, die vorangegangene Information bleibt gespeichert. Erst wenn der Bus nicht mehr angefordert ist und das Signal der Busanspruchsignalleitung 20 = « 1 » ist, gelangt über den Inverter 49 eine « 1 » an den $\bar{S}$-Eingang des RS-Kippgliedes 48 und setzt dessen $\bar{Q}$-Ausgang auf « 0 » und damit den Ausgang des Inverters 47 auf « 1 ». Dadurch ist die Blockierung des Teilnehmers aufgehoben. Das UND-Glied 45 kann jetzt über den Inverter 46 eine « 0 » auf die Busanspruchsignalleitung 20 aufbringen und damit kennzeichnen, dass der Bus angefordert ist. Die Busanspruchsignalleitung 20 wird also aktiv bzw. führt das Signal « 0 » wenn sich ein Teilnehmer an dem Auswahlvorgang beteiligen darf, d. h. wenn :

1. er den Bus beansprucht (Busanforderungssignal 17' = « 1 »),
2. er nicht bereits den Bus gewonnen hat ($\bar{Q}$-Ausgang 57" des D-Kippgliedes 57 = « 1 ») und
3. seit der letzten Zuteilung des Busses an diesen Teilnehmer alle Anforderungen anderer Teilnehmer erledigt wurden (Busanspruchsignal 20' = « 1 » und $\bar{Q}$-Ausgang 48" des RS-Kippgliedes 48 = « 0 »).

Sind diese Bedingungen erfüllt, erhält der $\bar{R}$-Eingang des RS-Kippgliedes 50 eine « 1 ». Falls der $\bar{S}$-Eingang desselben Kippgliedes auf « 0 » ist (kein Auswahldauersignal 21'), dann kippt das Kippglied 50, und am $\bar{Q}$-Ausgang erscheint eine « 0 », die über das ODER-Glied 64 ein Vergleichssignal 22' = « 1 » liefert, so dass der Teilnehmer an der Auswahl in der Teilnehmer-Auswahlschaltung 16, siehe Fig. 2, beteiligt ist.

Das monostabile Kippglied 55 mit invertiertem, dynamischem Eingang dient zur Erzeugung des Auswahldauersignals 21'. Dieses Auswahldauersignal wird benötigt, um zu verhindern, dass sich ein Teilnehmer an einem bereits angelaufenen Auswahlvorgang beteiligt (RS-Kippglied 53) und um die grösstmögliche Dauer eines Auswahlvorganges festzusetzen. Für das Auswahldauersignal 21' ist eine eigene Busleitung vorgesehen, die von jedem am Auswahlvorgang beteiligten Teilnehmer aktiviert — d. h. auf « 0 » gesetzt — werden muss, sobald der Auswahlvorgang stattfinden kann und solange ein Teilnehmer braucht, um die Auswahl zu entscheiden.

Das Kippglied 55 wird angestossen, wenn alle Bedingungen für ein Auswahlverfahren erfüllt sind, und zwar :

1. wenn der Teilnehmer nicht bereits den Bus gewonnen hat (Ausgang 57"),
2. wenn der Bus von diesem oder einem anderen Teilnehmer angefordert wird (Ausgang von 49),
3. wenn das Kippglied 50 gesetzt ist, d. h. wenn die Gerechtigkeitsbedingung (Kippglied 48) erfüllt ist, und kein Auswahlverfahren stattfindet (Ausgang 59),
4. wenn der Gewinner des letzten Auswahlverfahrens den Bus bekommen und die Busbesetztsignalleitung 19 aktiviert hat (Kippglied 53).

Die Dauer seines Ausgangsimpulses ist so bemessen, dass die eigene Teilnehmer-Auswahlschaltung 16 genügend Zeit zur Entscheidung der Auswahl hat. Das Vorhandensein des Auswahldauersignals 21' = « 0 » signalisiert allen anderen Teilnehmern, dass ein Auswahlvorgang stattfindet.

Andere wartende Teilnehmer können sich zur gleichen Zeit an der Auswahl beteiligen, da für alle die Freigabe zur Auswahl zur gleichen Zeit erfolgt, nämlich dann, wenn der Bus frei ist und das Busbesetztsignal 19' = « 0 » wird. Damit auch der langsamste Teilnehmer den Anfang des Auswahlvorganges klar erkennen kann, muss folgende zeitliche Bedingung eingehalten werden : Zwischen Deaktivieren (19 → « 0 ») des Busbesetztsignals 19' und Aktivieren (21 → « 0 ») der Auswahldauersignalleitung 21 muss eine gewisse vorgebbare Zeitdauer verstreichen, die technologieabhängig ist. Diese Zeitdauer beträgt z. B. 50 ns ; sie sollte mindestens solange sein, wie die Dauer von zwei Gatterverzögerungen plus drei Buslaufzeiten.

Das Ende des Auswahlvorganges wird durch die hintere Flanke des Auswahldauersignals 21' signalisiert, die vom langsamsten an der Auswahl beteiligten Teilnehmer kommt, denn die Auswahldauersignalleitung 21 wird durch Treiber mit offenem Kollektorausgang beaufschlagt bzw. aktiviert.

Das flankengetriggerte D-Kippglied 57 mit invertiertem Rücksetzeingang dient dazu, ein Gewinnersignal zu erzeugen und zu speichern, wenn der eigene Teilnehmer den Auswahlvorgang gewonnen hat. In diesem Fall liefert die Teilnehmer-Auswahlschaltung 16 das Grösser-/Gleich-Signal 23' = « 1 ». Dieses Signal wird durch die Endflanke des Auswahldauersignals 21' als Gewinnersignal gespeichert, d. h. wenn das Auswahldauersignal 21' von « 0 » auf « 1 » ändert, was über die Inverter 59 und 58 auf den Triggereingang des D-Kippgliedes 57 übertragen wird. Am Q̄-Ausgang des D-Kippgliedes erscheint dann das Signal « 1 » mit der Bedeutung « Gewinner », und am Q̄-Ausgang des D-Kippgliedes erscheint gleichzeitig das Signal « 0 ». Die Speicherung eines Gewinnersignals durch Störimpulse am D- und Triggereingang des D-Kippgliedes 57 muss verhindert werden. Falls eine Störung vorliegt, bleibt der Rücksetzeingang R des D-Kippgliedes 60 aktiviert, und der Gewinner wird nicht gespeichert. Ein einwandfreies Gewinnersignal bleibt indessen solange gespeichert, bis ein Auswahlvorgang beginnt und das D-Kippglied 57 über dessen invertierten Rücksetzeingang zurückgesetzt wird. Dafür ist die Schaltung bestehend aus NAND-Glied 61, Inverter 62 und Kondensator 65 verantwortlich. Diese Schaltung bildet ein Differenzierglied, das über das NAND-Glied 60 das Kippglied 57 bei der vorderen Flanke des Auswahldauersignals 21' zurücksetzt. Der aus der Auswahl als Gewinner hervorgegangene Teilnehmer darf anschliessend den Bus beanspruchen, sobald oder falls dieser frei ist, d. h. wenn das Busbesetztsignal 19' = « 0 » ist. Dann ist das Ausgangssignal des NAND-Gliedes 41 = « 0 », so dass das Ausgangssignal des RS-Kippgliedes 42 ebenfalls « 0 » und das Busbewilligungssignal 18' = « 1 » wird.

Mit dem D-Kippglied 57 wird eine Einsparung des Auswahlvorganges bewirkt, wenn der eigene Teilnehmer den Bus gewonnen hat, erneut den Bus haben möchte, und kein anderer Teilnehmer den Bus angefordert hat, d. h. wenn das Signal der Busanspruchsignalleitung - 20 = « 1 » ist. Kommt vom logischen Teilnehmerschaltkreis 14 eine erneute Busanforderung mit einem Busanforderungssignal 17' = « 1 », so ist das Ausgangssignal des NAND-Gliedes 41 noch unverändert auf « 0 », und der Teilnehmer hat den Bus sofort zur Verfügung, ohne einen Auswahlvorgang durchführen zu müssen. Solange das Gewinnersignal gespeichert ist, gelangt vom Q̄-Ausgang des D-Kippgliedes 57 ein « 0 »-Signal zum UND-Glied 45, wodurch dessen Ausgangssignal « 0 » ist, was bedeutet, dass der eigene Teilnehmer die Busanspruchsignalleitung 20 nicht aktiviert. Durch dieses Nichtaktivieren wird ausserdem erreicht, dass Teilnehmer-Auswahlschaltungen 16 unterschiedlichen Aufbaus mit der erfindungsgemässen Busvergabeschaltung 15 kompatibel sind. Wenn in der Zwischenzeit jedoch ein Auswahlverfahren stattgefunden hat oder stattfindet, dann wurde das Kippglied 57 zurückgesetzt, und der Teilnehmer muss sich an einem Auswahlverfahren beteiligen.

Mit der vorliegenden Busvergabeschaltung 15 ist es ferner möglich, den Benützer des Busses zu identifizieren, da die Prioritätsinformation, d. h. die Information, welcher Teilnehmer den Bus hat, solange auf den Busprioritätsleitungen 24 ansteht, bis dieser Teilnehmer sein Gewinnersignal verliert. Dies wird erreicht, indem der Q̄-Ausgang des D-Kippgliedes 57 mit dem invertierten Eingang des ODER-Gliedes 64 verbunden ist. Bei gespeichertem Gewinnersignal ist der Q̄-Ausgang des D-Kippgliedes 57 auf « 0 », der Ausgang des ODER-Gliedes 64 auf « 1 » und damit die Adresse des Gewinners jederzeit von den Busprioritätsleitungen 24 detektierbar. Damit lassen sich Ueberwachungsfunktionen und auch sog. dynamische Prioritäten realisieren, mit denen unterschiedliche Algorithmen für die Buszuteilung angewendet werden können. Es ist z. B. möglich, die Buspriorität aufgrund der detektierbaren Priorität abzuändern, um geordnete Warteschlangen zu organisieren. Diese Erfindung bietet dabei den zusätzlichen Vorteil, dass ein Fehlstart verhindert wird, wenn zwei Teilnehmer aus irgendeinem Grund, z. B. durch eine Busstörung, ihr Gewinner-D-Kippglied gesetzt bekommen. Eine Berichtigung würde sofort über das GE-Signal 23' erfolgen, das wahr oder « 1 » sein muss, damit das RS-Kippglied 42 gesetzt werden kann.

Die Berichtigung durch das GE-Signal 23' bringt der erfindungsgemässen Busvergabeschaltung 15 den weiteren Vorteil, dass sie selbststartend ist und keinen Initialisierungsimpuls benötigt, um in den Anfangszustand überzugehen.

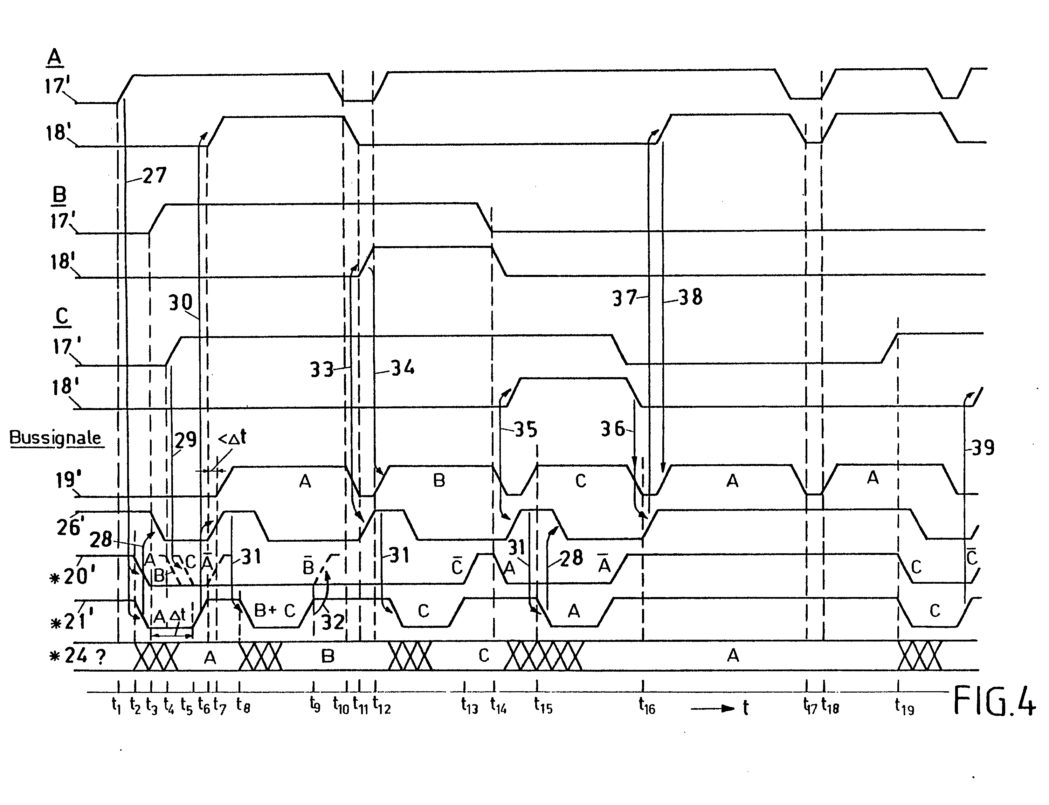

Nachfolgend wird die Wirkung der erfindungsgemässen Busvergabeschaltung nochmals anhand des Signaldiagramms von Fig. 4 erläutert, in der auf der Ordinate die Zustände verschiedener Signale und auf der Abszisse die Zeit t aufgetragen sind. Mit A, B und C sind drei Teilnehmer bezeichnet, deren Busanforderung und Busbewilligungssignale 17' und 18' jeweils untereinander eingetragen sind. Darunter sind die Verläufe des Busbesetztsignals 19', des Auswahlerlaubnissignals 26', des Busanspruchsignals 20' und des Auswahldauersignals 21' sowie die Belegungen der Busprioritätsleitungen 24 durch die Teilnehmer A, B und C dargestellt. Bei den durch Treiber mit offenen Kollektorausgängen erzeugten Signalen 20' und 21', die mit einem * gekennzeichnet sind, sind die Einschaltzustände tief und die Ausschaltzustände hoch gezeichnet ; bei den anderen Signalen sind die Einschaltzustände hoch und die Ausschaltzustände tief dargestellt. Die Pfeile 27 bis 39 zeigen an, welche Signaländerungen oder -zustände wechselseitig aufeinanderfolgen bzw. sich bedingen.

Die Signalverläufe vor dem Zeitpunkt $t_1$ kennzeichnen z. B. den Einschaltzustand, bei dem kein Teilnehmer den Bus anfordert. In diesem Zustand ist das Busbesetztsignal 19' auf « 0 » und das Auswahldauersignal 21' auf « 1 », so dass das RS-Kippglied 53 am $\bar{Q}$-Ausgang das Signal « 0 » führt und das Auswahlerlaubnissignal 26' = « 1 » ist. Es kann also jederzeit ein neuer Auswahlvorgang beginnen. Zum Zeitpunkt $t_1$ wird vom Teilnehmer A der Bus angefordert ; sein Busanforderungssignal 17' ändert von « 0 » nach « 1 ». Dies hat zur Folge, dass das Ausgangssignal des UND-Gliedes 45 « 1 » wird und das Busanspruchsignal 20' am Ausgang des Inverters 46 zur Zeit $t_2$ auf « 0 » geht. Gleichzeitig wird das Ausgangssignal des RS-Kippgliedes 50 = « 0 » und erlaubt über das ODER-Glied 64 mit negierten Eingängen, dessen Ausgangs- bzw. Vergleichssignal 22' den Wert « 1 » annimmt, den sofortigen Beginn eines Auswahlvorganges. Da das Ausgangssignal des Inverters 51 den Wert « 1 » annimmt, wird das Ausgangssignal des NAND-Gliedes 54 = « 0 » und stösst das monostabile Kippglied 55 an, das über den Inverter 56 das Auswahldauersignal 21' aktiviert, d. h. auf « 0 » bringt, vgl. den Pfeil 27 in Fig. 4. Das Auswahldauersignal « 0 » hat zur Folge, dass über die Inverter 59 und 63 das RS-Kippglied 53 zurückgesetzt wird und das Auswahlerlaubnissignal 26' von « 1 » auf « 0 » ändert, vgl. Pfeil 28. Der Beginn des Auswahldauersignals 21' setzt gleichzeitig über das Differenzierglied 61, 62, 65 das D-Kippglied 57 aller Teilnehmer zurück. Damit verliert der letzte Busbenützer sein Recht auf Wiederbenützung des Busses ohne Auswahlverfahren.

Zum Zeitpunkt $t_3$ wird der Bus vom Teilnehmer B angefordert, während ein Auswahlvorgang läuft. Dessen RS-Kippglied 50 hatte zuvor seinen $\bar{S}$-Eingang auf « 0 » und durch das von der Auswahldauersignalleitung 21 detektierte Auswahldauersignal « 0 » seinen $\bar{S}$-Eingang auf « 1 », mithin ein $\bar{Q}$-Ausgangssignal « 1 », das am Ausgang seines ODER-Gliedes 64 mit negierten Eingängen ein « 0 »-Vergleichssignal 22' bewirkt und somit eine Teilnahme am Auswahlvorgang verhindert. Wenn nun sein Busanforderungssignal 17' nach « 1 » ändert, erhält der $\bar{R}$-Eingang seines RS-Kippgliedes 50 über das UND-Glied 45 ebenfalls ein « 1 »-Signal, was jedoch das Ausgangssignal dieses RS-Kippgliedes unverändert lässt. Der Teilnehmer B aktiviert jedoch über seinen Inverter 46 ebenfalls die Busanspruchsignalleitung 20, was im Signalverlauf von 20' in Fig. 4 gestrichelt angedeutet ist.

Zum Zeitpunkt $t_4$ wünscht der Teilnehmer C ebenfalls den Bus. Er steht diesbezüglich in derselben Position wie der Teilnehmer B. Er aktiviert ebenfalls die Busanspruchsignalleitung 20, vgl. Pfeil 29. Zum Zeitpunkt $t_5$ kippt das Ausgangssignal des monostabilen Kippgliedes 55 des Teilnehmers A auf seinen Ausgangswert zurück, und das Auswahldauersignal 21' ändert von « 0 » nach « 1 ». Durch diese Aenderung bzw. Flanke des Auswahldauersignals 21' wird der Gewinner des Auswahlvorganges (in diesem Fall mit nur einem Beteiligten) im flankengetriggerten D-Kippglied 57 gespeichert. Da der Bus frei ist, das Busbesetztsignal 19' = « 0 » und das NAND-Glied 41 über den Inverter 44 vorbereitet ist, kann der Teilnehmer A den Bus sofort benutzen. Ueber sein RS-Kippglied 42 setzt der Teilnehmer A sein Busbewilligungssignal 18' zum Zeitpunkt $t_6$ auf « 1 », vgl. Pfeil 30, und hält diesen Zustand, solange sein Busanforderungssignal 17' = « 1 » ist, gespeichert.

Da am Ende des Auswahlvorganges das Auswahldauersignal von « 0 » auf « 1 » ändert und das Busbesetztsignal 19' = « 0 » ist, tritt am Ausgang des RS-Kippgliedes 53 ein « 0 »-Signal auf, so dass das Auswahlerlaubnissignal 26' = « 1 » ist und die Teilnehmer B und C mit einem neuen Auswahlvorgang beginnen können, vgl. Pfeil 31, Zeitpunkt $t_8$. Der Teilnehmer A muss jedoch den Bus besetzen, Zeitpunkt $t_7$, und das Busbesetztsignal 19' auf « 1 » setzen, bevor die Teilnehmer B und C den Auswahlvorgang beendet haben. $t_7-t_6$ muss < $\Delta t$ sein, wenn $\Delta t$ die Zeitdauer für den schnellsten Auswahlvorgang bezeichnet.

Falls der Teilnehmer B schneller ist als C, so wird sein monostabiles Kippglied 55 sein Ausgangssignal schneller zurücksetzen als das Kippglied 55 des Teilnehmers C. Das Auswahldauersignal 21' bleibt jedoch solange auf « 0 », bis es zur Zeit $t_9$ auch durch C deaktiviert, bzw. auf « 1 » gesetzt wird. In Abhängigkeit von diesem Uebergang wird das Auswahlerlaubnissignal 26' auf « 0 » gesetzt und verhindert, dass C erneut das Auswahldauersignal 21' auf « 0 » bringt.

Zum Zeitpunkt $t_9$ hat B gespeichert, dass er Sieger des Auswahlvorganges ist. Er erzeugt am Ausgang seines Inverters 46 ein Busanspruchsignal 20' = « 1 », vgl. Pfeil 32. Die Busanspruchsignalleitung 20 wird jedoch durch C weiterhin auf « 0 » gehalten, da C nicht Gewinner ist.

Zum Zeitpunkt $t_{10}$ hat A seine Informationsübertragung beendet und setzt das Busbesetztsignal 19' auf « 0 ». In Abhängigkeit davon gehen zum Zeitpunkt $t_{11}$ das Auswahlerlaubnissignal 26' auf « 1 » und das Busbewilligungssignal 18' von B auf « 1 », vgl. Pfeil 33. Das Auswahlerlaubnissignal 26' = « 1 » erlaubt dem Teilnehmer C mit einem neuen Auswahlvorgang zu beginnen.

Nachdem B den Bus zur Verfügung hat, setzt er das Busbesetztsignal 19' auf « 1 », Zeitpunkt $t_{12}$.

Zu diesem Zeitpunkt $t_{12}$ fordert A den Bus erneut an. Da Teilnehmer A den Bus bereits vorher erhalten hatte und das Busanspruchsignal 20' inzwischen nicht in seinen unaktiven Zustand « 1 » zurückgekehrt ist, kann er sich nicht am Auswahlvorgang mit C beteiligen.

Zum Zeitpunkt $t_{13}$ hat C den Auswahlvorgang gewonnen und aktiviert nicht länger die Busanforderungssignalleitung 20. Das Busanspruchsignal 20' wird « 0 » und setzt das RS-Kippglied 48 des Teilnehmers A. Dadurch wird über das UND-Glied 45 das RS-Kippglied 50 zurückgesetzt, so dass an dessen Q̄-Ausgang ein « 0 »-Signal auftritt und über das ODER-Glied 64 mit negierten Eingängen bzw. über das Vergleichssignal 22' einen Auswahlvorgang für A ermöglicht. Gleichzeitig setzt A das Busanspruchsignal 20' auf « 0 ».

Zum Zeitpunkt $t_{14}$ hat auch B seine Informationsübertragung beendet und setzt das Busbesetztsignal 19' auf « 0 ». Dadurch wird das Auswahlerlaubnissignal 26' für alle Teilnehmer, insbesondere für A, und das Busbewilligungssignal 18' für C auf « 1 » gebracht, vgl. Pfeil 35.

Zum Zeitpunkt $t_{15}$ hat C das Busbesetztsignal 19' auf « 1 » gesetzt, und A setzt das Auswahldauersignal 21' auf « 0 ».

Zum Zeitpunkt $t_{16}$ hat C seine Informationsübertragung beendet ; es setzt das Busbesetztsignal 19' auf « 0 » und damit das Auswahlerlaubnissignal 26' auf « 1 », vgl. Pfeil 36. Daraufhin übernimmt A den Bus, vgl. Pfeil 37, und setzt das Busbesetztsignal 19' wieder auf « 1 », vgl. Pfeil 38. Die Adresse von A bleibt solange auf den Busprioritätsleitungen 24 (der Gewinner bleibt im D-Kippglied 57 gespeichert), bis ein anderer Teilnehmer den Bus anfordert. Während des Auswahlvorganges kann seine Adresse von anderen Teilnehmern überschrieben werden, was durch XX gekennzeichnet ist.

Zum Zeitpunkt $t_{17}$ hat A seine Informationsübertragung beendet, ohne dass der Bus anderweitig verlangt wurde.

Zum Zeitpunkt $t_{18}$ fordert A den Bus erneut an und übernimmt ihn sofort ohne Auswahlvorgang, da zwischenzeitlich der Bus von keinem anderen Teilnehmer angefordert war. Hierbei wird die Zeitdauer für einen Auswahlvorgang eingespart.

Zum Zeitpunkt $t_{19}$ fordert C den Bus erneut an und beginnt einen Auswahlvorgang. Damit wird das Kippglied 57 von A zurückgesetzt und A verliert das Recht, ohne Auswahlvorgang den Bus zubenützen. Nach Beendigung der Informationsübertragung von A, vgl. Pfeil 39, erhält C den Bus.

Die Erfindung ist auf das in den Zeichnungen Dargestellte selbstverständlich nicht beschränkt. So könnte anstelle einer negativen Signallogik für das Busanspruchsignal 20' und das Auswahldauersignal 21' auch eine positive verwendet werden. Es könnten auch alle Signalleitungen mit einer unterschiedlichen Signallogik betrieben werden. Statt Kippgliedern aus NAND-Gliedern liessen sich auch solche aus NOR-Gliedern verwenden, wobei bezüglich der Ein- und Ausgänge die Wahrheitswerte für RS-Flip-Flops aus NOR-Gliedern zu berücksichtigen wären.

## Patentansprüche

1. Vergabeschaltung für Parallelbusse von Datenverarbeitungsanlagen mit mehreren an der Busvergabe beteiligten Teilnehmern, wobei jeder dieser Teilnehmer eine Busvergabeschaltung hat, die ein erstes bistabiles Speicherglied (42) aufweist, das in Abhängigkeit von einem Gewinnersignal (57 Q = « 1 ») und ferner in Abhängigkeit von einem Busbesetztsignal (19' = « 0 ») mit der Information, dass der Bus frei ist, ein Busbewilligungssignal (18' = « 1 ») erzeugt, mit der Information, dass der Teilnehmer den Bus zur Verfügung hat, wobei dieses erste bistabile Speicherglied (42) dieses Busbewilligungssignal (18' = « 1 ») solange erzeugt, solange der Teilnehmer gleichzeitig ein Busanforderungssignal (17' = « 1 ») mit der Information liefert, dass der Bus angefordert wird, dadurch gekennzeichnet, dass ein zweites bistabiles Speicherglied (57) vorgesehen ist, das in Abhängigkeit von einem Grösser-/Gleich-Signal (23' = « 1 ») mit der Information, dass der Teilnehmer einen Auswahlvorgang gewonnen hat, diese Gewinnerinformation solange speichert und ein Gewinnersignal (57 Q = « 1 ») solange abgibt, bis auf einer Auswahldauersignalleitung (21) ein Auswahldauersignal (21' = « 0 ») anliegt mit der Information, dass mindestens ein Teilnehmer mit einem Auswahlvorgang begonnen hat.

2. Vergabeschaltung nach Anspruch 1, dadurch gekennzeichnet, dass das zweite bistabile Speicherglied ein flankengetriggertes D-Kippglied (57) ist, dessen Triggereingang mit einer Auswahldauersignalleitung (21) in Wirkverbindung steht, wobei die Rücksetzung dieses D-Kippgliedes in Abhängigkeit von der vorderen Flanke des Auswahldauersignales (21' → « 0 ») und die Triggerung in Abhängigkeit von der Endflanke des Auswahldauersignals (21' → « 1 ») bewirkt wird, dessen D-Eingang mit einer Grösser-/Gleich-Signalleitung (21) einer Teilnehmer-Auswahlschaltung (16) in Verbindung steht, und das mindestens einen ersten Ausgang (57') aufweist, an dem das Gewinnersignal (57 Q = « 1 ») abgreifbar ist.

3. Vergabeschaltung nach Anspruch 2, dadurch gekennzeichnet, dass das Gewinnersignal des zweiten bistabilen Speichergliedes (57) invertiert (57") an den negierten Eingang eines ODER-Gliedes (64) geführt ist, dessen Ausgang mit einer Vergleichssignalleitung (22) der Teilnehmer-Auswahlschaltung (16) verbunden ist, die im aktivierten Zustand (22' = « 1 ») die Information liefert, dass der Teilnehmer an einem Auswahlvorgang der Busvergabe teilnimmt.

4. Vergabeschaltung nach Anspruch 2 oder 3, dadurch gekennzeichnet, dass das flankengetriggerte D-Kippglied (57) in Abhängigkeit von einem Grösser-Gleich-Signal (23') mit der Information, dass Busprioritätsleitungen (24) des Teilnehmers durch einen anderen Teilnehmer gestört wurden, zurückgesetzt wird.

5. Vergabeschaltung nach einem der Ansprüche 1 bis 4, dadurch gekennzeichnet,

a) dass das erste bistabile Speicherglied ein RS-Kippglied (42) ist, dessen negierter R̄-Eingang mit einer Busanforderungssignalleitung (17), dessen negierter S̄-Eingang mit dem Ausgang eines ersten NAND-Gliedes (41) und dessen Q̄-Ausgang mit einer Busbewilligungssignalleitung (18) in Wirkverbindung steht, wobei ein erster Eingang dieses NAND-Gliedes (41) mit einem Ausgang des zweiten bistabilen Kippgliedes und ein zweiter Eingang dieses NAND-Gliedes mit einer Busbesetztsignalleitung (19) in Wirkverbindung steht, und

b) dass ein drittes bistabiles Speicherglied (53) vorgesehen ist, das in Abhängigkeit von dem Auswahldauersignal (21' = « 0 ») mit der Information, dass ein Auswahlvorgang stattfindet, verhindert, dass ein nicht am Auswahlvorgang beteiligter Teilnehmer ein solches Auswahldauersignal erzeugt und das diese Verhinderung aufhebt, sobald das Busbesetztsignal (19' = « 0 ») die Information hat, dass der Bus frei ist.

6. Vergabeschaltung nach Anspruch 5, dadurch gekennzeichnet, dass das dritte bistabile Speicherglied ein RS-Kippglied (53) ist, dessen negierter S̄-Eingang mit der Busbesetztsignalleitung (19), dessen negierter R̄-Eingang mit der Auswahldauersignalleitung (21) und dessen Q̄-Ausgang mit dem Triggereingang eines monostabilen Kippgliedes (55) zur Erzeugung eines Auswahldauersignals (21') vorgebbarer Dauer in Wirkverbindung steht, wobei dieses monostabile Kippglied (50) ausgangsseitig mit der Auswahldauersignalleitung (21) in Wirkverbindung steht.

7. Vergabeschaltung nach einem der Ansprüche 1 bis 6, dadurch gekennzeichnet, dass ein viertes bistabiles Speicherglied (50) vorgesehen ist, das in Abhängigkeit vom gleichzeitigen Vorhandensein

a) des Busanforderungssignals (17' = « 1 ») mit der Information, dass der Teilnehmer den Bus anfordert,

b) eines negierten Gewinnersignals (57 Q̄ = « 1 ») mit der Information, dass der Teilnehmer den Auswahlvorgang nicht gewonnen hat, dann ein Vergleichssignal (22' = « 1 ») mit der Information erzeugt, dass der Teilnehmer an einem Auswahlvorgang teilnehmen darf, wenn das Auswahldauersignal (21' = « 1 ») die Information hat, dass kein Auswahlvorgang stattfindet.

8. Vergabeschaltung nach Anspruch 7, dadurch gekennzeichnet, dass das vierte bistabile Speicherglied ein RS-Kippglied (50) ist, dessen negierter S̄-Eingang mit der Auswahldauersignalleitung (21), dessen negierter R̄-Eingang mit dem Ausgang eines UND-Gliedes (45) und dessen Q̄-Ausgang einerseits mit der Vergleichssignalleitung (22) und andererseits über ein NAND-Glied (54) und das monostabile Kippglied (55) mit der Auswahldauersignalleitung (21) in Wirkverbindung steht, wobei dieses UND-Glied (45) über einen ersten Eingang mit der Busanforderungssignalleitung (17), über einen zweiten Eingang mit einem Ausgang des zweiten bistabilen Speichergliedes (57 Q̄) in Wirkverbindung steht.

9. Vergabeschaltung nach einem der Ansprüche 1 bis 8, dadurch gekennzeichnet, dass ein fünftes bistabiles Speicherglied (48) vorgesehen ist, das in Abhängigkeit von dem Busbewilligungssignal (42 Q̄ = « 0 ») mit der Information, dass der Teilnehmer den Bus zur Verfügung hatte, ein Gerechtigkeitssignal (48 Q̄ = « 0 ») erzeugt, mit der Information, dass sich der Teilnehmer an Auswahlvorgängen nicht beteiligen darf, solange ein Busanspruchsignal (20' = « 0 ») die Information hat, dass der Bus von einem Teilnehmer angefordert ist.

10. Vergabeschaltung nach Anspruch 9, dadurch gekennzeichnet, dass dieses fünfte bistabile Speicherglied ein RS-Kippglied (48) ist, dessen negierter S̄-Eingang mit einer Busanspruchsignalleitung (20), dessen negierter R̄-Eingang mit dem Ausgang des zweiten bistabilen Speichergliedes (42) und dessen Q̄-Ausgang mit einem Eingang eines UND-Gliedes (45) in Wirkverbindung stehen, wobei dieses UND-Glied über einen anderen Eingang mit der Busanforderungssignalleitung (17), über einen weiteren Eingang mit einem Ausgang des zweiten bistabilen Speichergliedes (47) und ausgangsseitig einerseits mit der Busanspruchsignalleitung (20) und andererseits über einen Eingang des vierten bistabilen Speichergliedes (50) mit der Vergleichssignalleitung (22) und über das monostabile Kippglied (55) mit der Auswahldauersignalleitung (21) in Wirkverbindung steht.

**Claims**

1. Assignment circuit for parallel busses of data processing systems including several users involved in the bus assignment, each of these users having a bus assignment circuit which has a first bistable storage element (42) which, in dependence on a winner signal (57 Q = « 1 ») and also in dependence on a bus busy signal (19' = « 0 ») generates, with the information that the bus is free, a bus approval signal (18' = « 1 ») with the information that the bus is available to the user, in which arrangement this first bistable storage element (42) generates this bus approval signal (18' = « 1 ») for as long as, at the same time, the user supplies a bus request signal (17' = « 1 ») with the information that the bus is requested, characterized in that a second bistable storage element (57) is provided which, in dependence on a greater than/equal to signal (23' = « 1 ») with the information that the user has won a selection process, stores this winner information and emits a winner signal (57 Q = « 1 ») until a selection time signal (21' = « 0 ») with the information that at least one user has begun with a selection process is present on a selection time signal line (21).

2. Assignment circuit according to Claim 1, characterized in that the second bistable storage element is an edge-triggered D-type flipflop (57) the trigger input of which is effectively connected to a selection time signal line (21), the resetting of this D-type flipflop being effected in dependence on the front edge of the selection time signal (21' → « 0 ») and the triggering being effected in dependence on the last edge of the selection time signal (21' → « 1 »), the D input of which is connected to a greater than/equal to signal line (21) of a user selection circuit (16) and which has at least one first output (57') at which the winner signal (57 Q = « 1 ») can be picked up.

3. Assignment circuit according to Claim 2, characterized in that the winner signal of the second bistable storage element (57) is carried inverted (57") to the negated input of an OR element (64) the output of which is connected to a reference signal line (22) of the user selection circuit (16) which, in the activated state (22' = « 1 ») supplies the information that the user is participating in a selection process of the bus assignment system.

4. Assignment circuit according to Claim 2 or 3, characterized in that the edge-triggered D-type flipflop (57) is reset in dependence on a greater than/equal to signal (23') with the information that the bus priority lines (24) of the user have been disturbed by another user.

5. Assignment circuit according to one of Claims 1 to 4, characterized in that

a) the first bistable storage element is an RS flipflop (42) the negated R̄ input of which is effectively connected to a bus request signal line (17), the negated S̄ input of which is effectively connected to the output of a first NAND element (41) and the Q̄ output of which is effectively connected to a bus approval signal line (18), a first input of this NAND element (41) being effectively connected to an output of the second bistable flipflop and a second input of this NAND element being effectively connected to a bus busy signal line (19), and

b) a third bistable storage element (53) is provided which, in dependence on the selection time signal (21' = « 0 ») with the information that a selection process is taking place, prevents a user not involved in the selection process from generating such a selection time signal and which cancels this prevention as soon as the bus busy signal (19' = « 0 ») has the information that the bus is free.

6. Assignment circuit according to Claim 5, characterized in that the third bistable storage element is an RS flipflop (53) the negated S̄ input of which is effectively connected to the bus busy signal line (19), the negated R̄ input of which is effectively connected to the selection time signal line (21) and the Q̄ output of which is effectively connected to the trigger input of a monostable flipflop (55) for generating a selection time signal (21') of a predeterminable duration, the output of this monostable flipflop (50) being effectively connected to the selection time signal line (21).

7. Assignment circuit according to one of Claims 1 to 6, characterized in that a fourth bistable storage element (50) is provided which, in dependence on the simultaneous presence

a) of the bus request signal (17' = « 1 ») with the information that the user is requesting the bus,

b) of a negated winner signal (57 Q̄ = « 1 ») with the information that the user has not won the selection process,

generates a reference signal (22' = « 1 ») with the information that the user may participate in a selection process when the selection time signal (21' = « 1 ») has the information that no selection process is taking place.

8. Assignment circuit according to Claim 7, characterized in that the fourth bistable storage element is an RS flipflop (50) the negated S̄ input of which is effectively connected to the selection time signal line (21), the negated R̄ input of which is connected to the output of an AND element (45) and the Q̄ output of which is effectively connected, on the one hand, to the reference signal line (22) and, on the other hand, via a NAND element (54) and the monostable flipflop (55) to the selection time signal line (21), this AND element (45) being effectively connected via a first input to the bus request signal line (17), via a second input to an output of the second bistable storage element (57 Q̄).

9. Assignment circuit according to one of Claims 1 to 8, characterized in that a fifth bistable storage element (48) is provided which, in dependence on the bus approval signal (42 Q̄ = « 0 ») with the information that the bus was available to the user, generates a fairness signal (48 Q̄ = « 0 ») with the information that the user may not participate in selection processes for as long as a bus claim signal (20' = « 0 ») has the information that the bus is being requested by a user.

10. Assignment circuit according to Claim 9, characterized in that this fifth bistable storage element is an RS flipflop (48) the negated S̄ input of which is effectively connected to a bus claim signal line (20), the negated R̄ input of which is effectively connected to the output of the second bistable storage element (42) and the Q̄ output of which is effectively connected to an input of an AND element (45), this AND element being effectively connected via another input to the bus request signal line (17), via a further input to an output of the second bistable storage element (47) and at its output, on the one hand, to the bus claim signal line (20) and, on the other hand, via an input of the fourth bistable storage element (50) to the reference signal line (22) and via the monostable flipflop (55) to the selection time signal line (21).

**Revendications**

1. Circuit d'affectation pour bus parallèles dans des systèmes de traitement de données dans lesquels plusieurs utilisateurs sont intéressés par l'affectation des bus, chacun de ces utilisateurs ayant un circuit d'affectation de bus qui comporte un premier élément bistable de stockage (42) qui, sous condition d'un signal de gagnant (57 Q = « 1 ») ainsi que d'un signal de bus occupé (19' = « 0 »), génère, avec l'information que le bus est libre, un signal d'approbation de bus (18' = « 1 ») contenant l'information que le bus est à la disposition de l'utilisateur, ce par quoi ce premier élément bistable de stockage (42) génère ce signal d'approbation de bus (18' = « 1 ») pendant aussi longtemps que l'utilisateur fournit, en même temps, un signal de demande d'utilisation de bus (17' = « 1 ») contenant l'information que le bus est demandé, caractérisé en ce que l'on prévoit un second élément bistable de stockage (57), qui sous condition d'un signal supérieur/égal à (23' = « 1 ») contenant l'information que l'utilisateur a gagné un processus de sélection, stocke cette information de gagnant et émet un signal de gagnant (57 Q = « 1 ») jusqu'à ce que soit présent, sur une ligne de signal de temps de sélection (21), un signal de temps de sélection (21' = « 0 ») contenant l'information qu'un utilisateur au moins a entamé un processus de sélection.

2. Circuit d'affectation selon la revendication 1, caractérisé en ce que le second élément bistable de stockage est une bascule flip-flop de type D déclenchée par front d'impulsion (57) dont l'entrée de déclenchement est reliée de façon efficace à une ligne de signal de temps de sélection (21), la remise à l'état initial de cette bascule flip-flop de type D étant réalisée sous condition front avant du signal de temps de sélection (21' → « 0 ») et le déclenchement étant réalisé sous condition dernier front du signal de temps de sélection (21' → « 1 »), dont l'entrée D est reliée à une ligne de signal supérieur ou égal (21) d'un circuit de sélection d'utilisateur (16) et qui comprend au moins une première sortie (57') à laquelle on peut capter le signal de gagnant (57 Q = « 1 »).

3. Circuit d'affectation selon la revendication 2, caractérisé en ce que le signal de gagnant du second élément bistable de stockage (57) est acheminé en état inversé (57") jusqu'à l'entrée inversée d'un élément OU (64) dont la sortie est reliée à une ligne de signal de référence (22) du circuit de sélection d'utilisateur (16) qui, dans l'état déclenché (22' = « 1 »), fournit l'information que l'utilisateur est en train de participer à un processus de sélection du système d'affectation de bus.

4. Circuit d'affectation selon la revendication 2 ou la revendication 3, caractérisé en ce que la bascule flip-flop de type D déclenchée par front d'impulsion (57) est remise à l'état initial sous condition d'un signal supérieur ou égal (23') comportant l'information que les lignes de priorité de bus (24) de l'utilisateur ont été dérangées par un autre utilisateur.

5. Circuit d'affectation selon l'une quelconque des revendications 1 à 4, caractérisé en ce que

a) le premier élément bistable de stockage est une bascule flip-flop RS (42) dont l'entrée inversée R̄ est reliée de façon efficace à une ligne de signal de demande d'utilisation de bus (17), dont l'entrée inversée S̄ est reliée de façon efficace à la sortie d'un premier élément NON-ET (41) et dont la sortie Q̄ est reliée de façon efficace à une ligne de signal d'approbation de bus (18), une première entrée de cet élément NON-ET (41) étant reliée de façon efficace à une sortie de la seconde bascule flip-flop bistable et une seconde entrée de cet élément NON-ET étant reliée de façon efficace à une ligne de signal de bus occupé (19), et

b) l'on prévoit un troisième élément bistable de stockage (53) qui, en fonction du signal de temps de sélection (21' = « 0 ») contenant l'information qu'un processus de sélection est en cours, empêche un utilisateur qui ne participerait pas au processus de sélection de générer un tel signal de temps de sélection et qui annule cette entrave dès que le signal de bus occupé (19' = « 0 ») contient l'information que le bus est libre.

6. Circuit d'affectation selon la revendication 5, caractérisé en ce que le troisième élément bistable de stockage est une bascule flip-flop RS (53) dont l'entrée inversée S̄ est reliée de façon efficace à la ligne de signal de bus occupé (19), dont l'entrée inversée R̄ est reliée de façon efficace à la ligne de signal de temps de sélection (21) et dont la sortie Q̄ est reliée de façon efficace à l'entrée de déclenchement d'une bascule flip-flop monostable (55) afin de générer un signal de temps de sélection (21') de durée pouvant être prédéterminée, la sortie de cette bascule flip-flop monostable (50) étant reliée de façon efficace à la ligne de signal de temps de sélection (21).

7. Circuit d'affectation selon l'une quelconque des revendications 1 à 6, caractérisé en ce que l'on prévoit un quatrième élément bistable de stockage (50) qui, sous condition de la présence simultanée

a) du signal de demande d'utilisation de bus (17' = « 1 ») contenant l'information que l'utilisateur est en train de demander le bus,

b) d'un signal inversé de gagnant (57 Q̄ = « 1 ») contenant l'information que l'utilisateur n'a pas gagné le processus de sélection,

génère un signal de référence (22' = « 1 ») contenant l'information que l'utilisateur peut participer à un processus de sélection quand le signal de temps de sélection (21' = « 1 ») contient l'information qu'aucun processus de sélection n'est en cours.

8. Circuit d'affectation selon la revendication 7, caractérisé en ce que le quatrième élément bistable de stockage est une bascule flip-flop RS (50) dont l'entrée inversée S̄ est reliée de façon efficace à la ligne de signal de temps de sélection (21), dont l'entrée inversée R̄ est reliée à la sortie d'un élément ET (45) et dont la sortie Q̄ est reliée de façon efficace d'une part à la ligne de signal de référence (22) et d'autre part, par l'intermédiaire d'un élément NON-ET (54) et de la bascule flip-flop monostable (55), à la ligne de signal de temps de sélection (21), cet élément ET (45) étant relié de façon efficace par l'intermédiaire d'une première entrée, à la ligne de signal de demande d'utilisation de bus (17), par l'intermédiaire d'une seconde entrée à une sortie du second élément bistable de stockage (57 Q̄).

9. Circuit d'affectation selon l'une quelconque des revendications 1 à 8, caractérisé en ce que l'on prévoit un cinquième élément bistable de stockage (48) qui, sous condition du signal d'approbation de bus (42 $\bar{Q}$ = « 0 ») contenant l'information que le bus était à la disposition de l'utilisateur, génère un signal d'impartialité (48 $\bar{Q}$ = « 0 ») contenant l'information que l'utilisateur ne peut pas participer à des processus de sélection tant qu'un signal de demande d'utilisation de bus (20' = « 0 ») contient l'information qu'un utilisateur demande à utiliser le bus.

10. Circuit d'affectation selon la revendication 9, caractérisé en ce que ce cinquième élément bistable de stockage est une bascule flip-flop RS (48) dont l'entrée inversée $\bar{S}$ est reliée de façon efficace à une ligne de signal de demande d'utilisation de bus (20), dont l'entrée inversée $\bar{R}$ est reliée de façon efficace à la sortie du second élément bistable de stockage (42) et dont la sortie $\bar{Q}$ est reliée de façon efficace à une entrée d'un élément ET (45), cet élément ET étant relié de façon efficace, par l'intermédiaire d'une autre entrée, à la ligne de signal de demande d'utilisation de bus (17), par l'intermédiaire d'une entrée supplémentaire, à une sortie du second élément bistable de stockage (47) et à sa sortie, d'une part à la ligne de signal de demande d'utilisation de bus (20) et, d'autre part, par l'intermédiaire d'une entrée du quatrième élément bistable de stockage (50), à la ligne de signal de référence (22), et par l'intermédiaire de la bascule flip-flop monostable (55) à la ligne de signal de temps de sélection (21).

FIG.1

FIG.2

1

Busanforderung

Busbewilligung

"Gerechtigkeit"

Warten bis Auswahl beendet

Gewinner - Speicherglied

Bus besetzt.

Bus angefordert

Verhinderung einer 2.Auswahl

Auswahldauersignal

Auswahldauer- signal

Auswahl

FIG. 3

FIG.4